(19)

Europäisches
Patentamt
European
Patent Office
Office européen
des brevets

(11)    **EP 2 978 183 A1**

(12)    **EUROPEAN PATENT APPLICATION**

(43) Date of publication:
   **27.01.2016  Bulletin 2016/04**

(51) Int Cl.:
   **H04L 27/00** *(2006.01)*     **H04L 5/00** *(2006.01)*

(21) Application number: **14177769.8**

(22) Date of filing: **21.07.2014**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b><br><br>(71) Applicant: <b>Cassidian Finland OY</b><br><b>00380 Helsinki (FI)</b></td><td>(72) Inventor: <b>Laaksonen, Kimmo</b><br><b>00380 Helsinki (FI)</b><br><br>(74) Representative: <b>Cabinet Camus Lebkiri</b><br><b>25, Rue de Maubeuge</b><br><b>75009 Paris (FR)</b></td></tr>
</table>

(54)    **Filtering a modulated signal**

(57)    To provide more transmission capacity over whitespace spectrum, a filter unit suppressing undesired frequency ranges is added at the output of an OFDM modulator in a transmitter.

*FIG.4*

EP 2 978 183 A1

**Description**

FIELD

The invention relates generally to signal processing in a telecommunication system and particularly to filtering a modulated signal before transmission.

BACKGROUND ART

In recent years, the phenomenal growth of mobile Internet services and proliferation of smart phones and tablets has increased a demand for mobile broadband services, and hence more network capacity is required. One solution is to take into use whitespaces assigned between used radio bands or channels to avoid interference. In addition to the whitespaces existing between used channels, there is also unused radio spectrum which has either never been used, or is becoming free as a result of technical changes. Almost all new technologies, especially wideband technologies, in the wireless communication field have adopted OFDM (orthogonal frequency division multiplex) as the core technology. OFDM divides a channel into a number of mutually independent frequency bands (sub-carriers), and transmits data in parallel streams.

When the whitespaces between the used radio bands and around them are used for a single OFDM whitespace system, wide guard bands are needed between OFDM whitespace transmissions and OFDM radio band transmissions to avoid interference caused by quite strong spectrum side lobes of OFDM modulation. The wide guard bands reduce the amount of band usable for transmission.

SUMMARY

An object of the present invention is to provide a solution requiring narrower guard bands for OFDM whitespace transmissions. The object of the invention is achieved by a method, a filter unit, a transmitter and an apparatus that are characterized by what is stated in the independent claims. The preferred embodiments of the invention are disclosed in the dependent claims.

An aspect provides filter bank at an output of an OFDM modulator in a transmitter, the filter bank comprising both analysis filters and synthesis filters. By means of the filter bank the transmitter is able to match its output to any frequency allocation so that narrow guard bands are sufficient and hence there is more band available for transmission of data. Thereby the transmission capacity increases.

BRIEF DESCRIPTION OF THE DRAWINGS

In the following, exemplary embodiments will be described in greater detail with reference to accompanying drawings, in which

Figure 1 shows simplified exemplary architecture of a system and simplified exemplary block diagrams of a transmitter and a receiver;
Figure 2 illustrates a generalized filter structure for a filter unit;
Figure 3 is a flow chart illustrating functionality of the filter structure of Figure 2;
Figure 4 illustrates a filter structure for a prototype filter unit;
Figure 5 is a flow chart illustrating functionality relating to adjusting a filter unit;
Figure 6 is a flow chart illustrating functionality in a receiver; and
Figure 7 is a block diagram of an exemplary apparatus.

DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any apparatus that is configured to support OFDM and use of whitespace spectrum. Typically such apparatuses are configured to support dedicated wireless access to an access network/system that is configured to use the whitespace spectrum as an additional spectrum to the spectrum assigned for the network/system. Examples of such access systems/networks include LTE (Long Term Evolution) access system, Worldwide Interoperability for Microwave Access (WiMAX), LTE advanced (LTE-A), and beyond LTE-A, LTE with professional mobile radio (PMR) features, WiMAX with PMR features, WLAN (Wireless Local Area Net-work), like WiFi, with PMR features. A network with PMR features enables the provision of services with professional mobile radio (PMR) features, without any regulatory restriction regarding the targeted clientele.

The "whitespace spectrum" refers to one or more frequency bands that are free for unlicensed use. Generally, whitespace spectrum is a spectrum, which may be licensed and in which particular types of operation by unlicensed devices is permitted. For example, various whitespace devices may be permitted to operate in a predetermined location and on channels (e.g., frequency ranges) that are either unused by a licensee in that location or are not licensed in that location. The free frequencies around and between licensed (i.e., assigned and used) frequencies may be used for a single OFDM whitespace system. One example of the whitespace spectrum is TV whitespace spectrum that is licensed to a broadcaster in a particular region, but which is presently not used in the particular location.

OFDM refers herein generally to a method of encoding digital data on multiple carrier frequencies, and any OFDM-based protocol/access, such as orthogonal frequency-division multiple access (OFDMA), may be used.

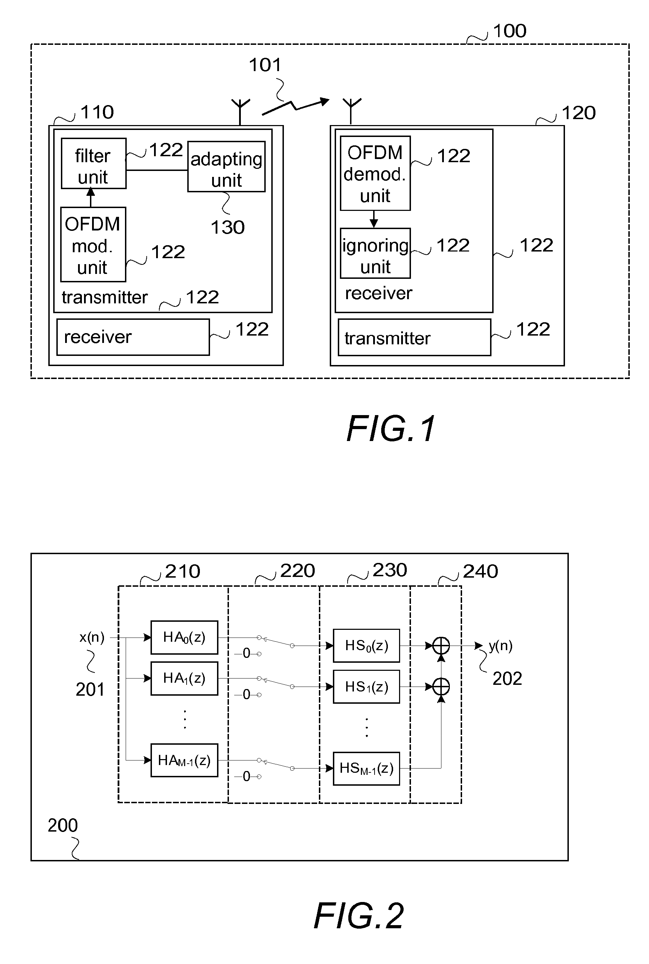

A general architecture of a system according to an embodiment is illustrated in Figure 1. Figure 1 is a simplified system architecture only showing entities participating to over an air communication. It is apparent to a person skilled in the art that the systems also comprise other apparatuses, functions and structures used in or for communication. However, they are irrelevant to the actual invention. Therefore, they need not to be discussed in more detail here.

In the example illustrated in Figure 1, the system 100 comprises a transmitting apparatus 110 and a receiving apparatus 120 configured to support a whitespace frequency communication over a radio channel 130.

In the illustrated example, a transmitter 111 in the transmitting apparatus 110 comprises a filter unit 111-1 at an output 111-3 of an OFDM modulator unit 111-2. Further, in the illustrated example the transmitter comprises an adjusting unit 111-4 for adjusting the filter unit. Different examples of the filter unit and how it is adjusted by means of the adjusting unit will be described in more detail below with Figures 2 to 5.

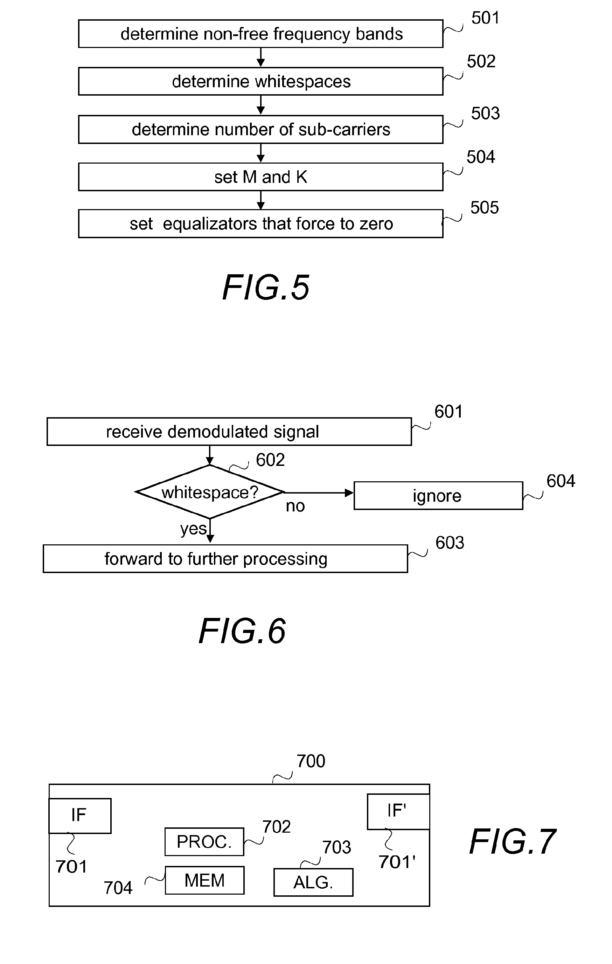

In the illustrated example, a receiver 121 in the receiving apparatus 120 comprises an ignoring unit 121-2 at an output 121-3 of an OFDM demodulator unit 121-1. An exemplary function of the ignoring unit 121-2 is described below with Figure 6.

Since in the illustrated example it is assumed that the transmitting apparatus 110 may also be a receiving apparatus, the transmitting apparatus comprises a receiver 121' which may correspond to the receiver 121 in the receiving apparatus 120 or may be a receiver without the ignoring unit. Respectively, in the illustrated example, the receiving apparatus 120 comprises a transmitter 111' which may correspond to the transmitter 111 in the transmitting apparatus or be a transmitter without the adapting unit, i.e. a transmitter using pre-set values in the filter unit or a transmitter without the filter unit and the adapting unit. However, it should be appreciated that a transmitting apparatus may be implemented without a receiver, and a receiving apparatus without a transmitter.

The transmitting and/or receiving apparatus 110, 120 may be a user apparatus or a base station. The user apparatus is a computing apparatus/equipment/ terminal providing voice and/or data communications for a user, and the user apparatus may be a handheld radio apparatus, or a so called fixed radio apparatus in a vehicle, for example. Examples of a handheld radio apparatus include a handheld radio terminal, a smart-phone, a personal digital assistant (PDA), a handset, a laptop, a touch screen computer, a tablet, a notebook and a multimedia device. The base station is a computing apparatus providing access to a network (not illustrated in Figure 1) over an air interface. Examples of a base station include a TETRA base station, an evolved node B, a wireless local area network (WLAN) access point, like a Wi-Fi hot spot, a wireless personal area network (WPAN) access point, a free-space optical communications access point using infrared, and a Worldwide Interoperability for Microwave Access (WiMAX) access point.

Figure 2 is a generalized filter structure 200 for the filter unit for suppressing from an OFDM whitespace signal, outputted from the OFDM modulator, one or more unwanted frequency ranges, such as non-free frequency ranges (for example those assigned to radio systems).

The exemplary filter unit 200 comprises a bank 210 of analysis filters HA(z), a bank 220 of equalizers, a bank 230 of synthesis filters HS(z), and a bank 240 of adders. The filter unit 200 is configured to receive as an input signal x(n) 201 an output of the OFDM modulator. In other words, the input signal is a modulated radio frequency signal. The bank of analysis filters 210 is configured to split the input signal 201 into M sub-signals of adjacent frequencies. Together the sub-signals contain all the information in the input signal, to a reasonable degree of accuracy. The bank 220 of equalizers is configured to dynamically force some of the sub-signals to zeros. In other words, an equalizer receiving a sub-signal of a frequency range that is within, or overlaps, a non-free frequency range is forced to zero. The bank 230 of synthesis filters is in turn configured to reconstruct the sub-signals received from the bank 220 of equalizers, for example by canceling aliasing caused by the bank 210 of analysis filters, and output them to a bank of combiners that combine the M sub-signals into an output signal y(n) 202. The thus obtained output signal 202 is a reasonable representation of the information to be transmitted.

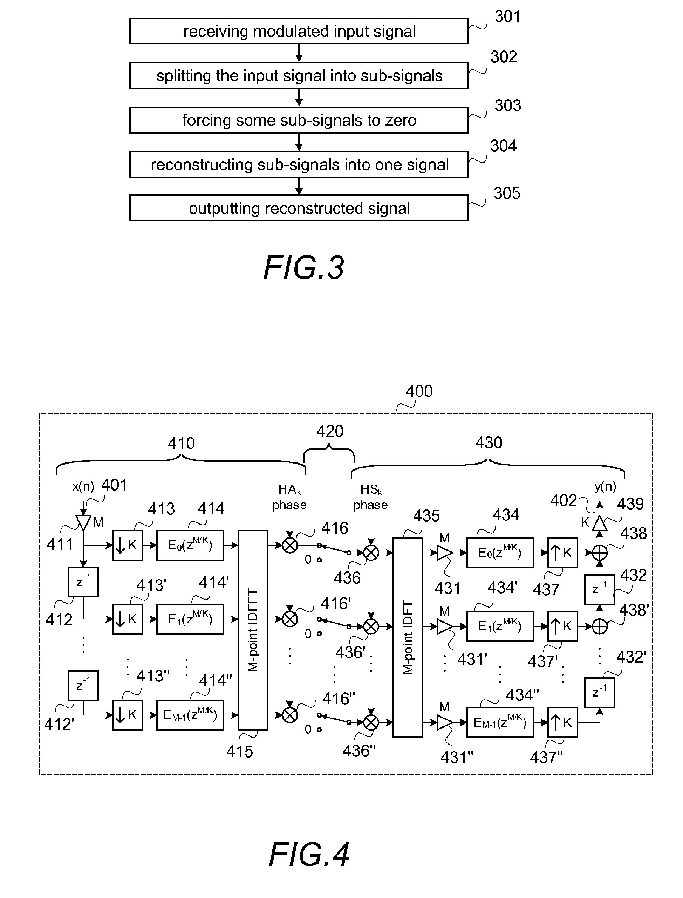

The functionality of the exemplary filter unit is described in Figure 3. In the example of Figure 3 it is assumed that the filter unit has been adjusted to a radio frequency allocation currently in use. Referring to Figure 3, when an input signal is received (step 301) from the OFDM modulator, it is split (step 302) into sub-signals of adjacent frequency ranges. Then those sub-signals that correspond to non-free frequencies are forced (step 303) to zero, others remain untouched, and the hence obtained resulting sub-signals are reconstructed (step 304) and then combined (step 305) into an output signal. Thanks to the splitting and forcing some sub-signals to zero, the wideness of the guard bands may be significantly reduced while ensuring that the transmission will not interfere with the existing systems and that the data remains reproducible after the transmission.

Figure 4 illustrates an exemplary filter structure for a prototype filter (prototype filter unit). The illustrated prototype filter H(z) 400 is a finite impulse response (FIR) high-pass filter having a -3 dB bandwidth that is equal to the intended sub-signal bandwidth. The intended sub-signal bandwidth may be equal to the sub-carrier bandwidth, for example. The prototype filter 400 has a polyphase decomposition, defined as:

$$H(z) = \sum_{k=0}^{M-1} z^{-k} E_k(z^M)$$

$$(1)$$

wherein

H(z) is a z-transform of the impulse response,
M is the number of branches (frequency bands),
z indicates z-transform, and
E is the filtering function (filter).

Referring to Figure 4, at an analysis filter portion 410 of the filter unit 400, the received input x(n) 401 is first amplified by a gain (amplifier) 411 having a value M dB, and the signal is inputted to down-samplers 413, 413', 413"; to one down-sampler directly and to the other down-samplers via one or more delays 412, 412' so that the second down-sampler receives the signal via one delay and the third down-sampler receives the signal via two delays, etc. Each delay 412, 412' delays the signal by $z^{-1}$, z indicating z-transform. In each path, the sub-band samples are down-sampled by a factor of K at a corresponding down-sampler 413, 413', 413", and filtered by a corresponding FIR high-pass filter 414, 414', 414". The factor K may be any positive integer that is smaller than or equal to the number of frequency bands (i.e. smaller than or equal to M). Then each path passes a multipoint transformer 415 performing inverse discrete fast fourier transform (IDFFT) calculations to the paths, i.e. the paths undergo the IDFFT algorithm which is known in prior art and therefore is not explained in greater detail herein. As a last stage at the analysis filter portion 410, each sub-signal undergoes a constant phase shifting in a corresponding multiplier 416, 416', 416", in which the sub-signal is multiplied by a phase term $HA_k$.

Then the sub-signals pass an equalizer portion 420 of the filter unit. The equalizer portion corresponds to the bank of equalizers described above with Figure 2. In the equalizer portion, sub-signals having a frequency band in the non-free spectrum are forced to zero.

At a synthesis filter portion 430 of the filter unit, each sub-signal received from the equalizer portion 420 undergoes first another constant phase shifting in a corresponding multiplier 416, 416', 416", in which the sub-signal is multiplied by a phase term $HS_k$. Then each path passes another multipoint transformer 435 performing IDFFT calculations to the paths, i.e. the paths undergo the IDFFT algorithm. After that each sub-signal is amplified by a corresponding gain (amplifier) 431, 431', 431", each gain having a value M dB. Each amplified sub-signal is filtered by a corresponding FIR high-pass filter 434, 434', 434" and then up-sampled by the factor of K at a corresponding up-sampler 437, 437', 437". The outputs of the up-samplers are then combined so that all other sub-signals except the first one and the last one are inputted to a corresponding two input adder 438' which combines the sub-signal with an input from a delay 432 and outputs the result to a further delay, each delay 432, 432' delaying the signal by $z^{-1}$. The last sub-signal is inputted from the up-sampler 437" to a delay 432' which inputs the delayed sub-signal to a two input adder. The first sub-signal is inputted to a two input adder 438 that receives the other sub-signals combined together and delayed one or more times, the combiner inputting the combined signal, as a last phase in the synthesis filter portion, to a gain 439 having a value K dB to output an amplified output signal y(n) 402 which is ready to be transmitted.

Although in the example of Figure 4, inverse discrete fast fourier transform is applied twice, it should be appreciated that in other examples, one of the inverse discrete fast fourier transforms may be replaced by a discrete fast fourier transform. For example, the multipoint transformer 415 may configured to perform a discrete fast fourier transform calculations to the path.

The filters in the analysis portion and in the synthesis portion may be defined as disclosed in "Digital Signal Processing, A Computer Based Approach", 2nd edition, Sanjit K. Mitra, page 731, i.e. as frequency and phase shifted versions of the prototype filter of order N:

$$ha_k(n) = 2 \cdot h(n) \cdot \cos\left(\left(k + \frac{1}{2}\right) \cdot \left(n - \frac{N}{2}\right) \cdot \frac{\pi}{M} + (-1)^k \cdot \frac{\pi}{4}\right)$$

$$hs_k(n) = 2 \cdot h(n) \cdot \cos\left(\left(k + \frac{1}{2}\right) \cdot \left(n - \frac{N}{2}\right) \cdot \frac{\pi}{M} - (-1)^k \cdot \frac{\pi}{4}\right)$$

(2)

wherein

$ha_k(n)$ is an impulse response request of a $k^{th}$ analysis sub-filter,
$n$ is a time index,
$h(n)$ is an impulse response,
$N$ is the order of the prototype filter,
$M$ is the number of sub-signals,
$hs_k(n)$ is an impulse response request of a $k^{th}$ synthesis sub-filter.

The results are filters with real coefficients and double-sided spectrums.

However, the use of above formula (2) limits the possible filtered frequency patterns. In order to allow much more complex filtering patterns, the above formula (2) for analysis and synthesis filters may be amended by replacing the cosines with complex exponentials, and to replace (k+1/2) with mere k, in which case the filters are defined as:

$$ha_k(n) = h(n) \cdot \exp\left(2 \cdot j \cdot \left(k \cdot \left(n - \frac{N}{2}\right) \cdot \frac{\pi}{M} + (-1)^k \cdot \frac{\pi}{4}\right)\right)$$

$$hs_k(n) = h(n) \cdot \exp\left(2 \cdot j \cdot \left(k \cdot \left(n - \frac{N}{2}\right) \cdot \frac{\pi}{M} - (-1)^k \cdot \frac{\pi}{4}\right)\right)$$

(3)

wherein

$ha_k(n)$ is an impulse response request of a $k^{th}$ analysis sub-filter,
$n$ is a time index,
$h(n)$ is impulse response at time n,
$j$ is the imaginary unit,
$N$ is the order of the prototype filter,
$M$ is the number of sub-signals,
$hs_k(n)$ is an impulse response request of a $k^{th}$ synthesis sub-filter.

The resulting filters of formula (3) have complex taps and singlesided spectrums. Dropping the +1/2 term from (k+1/2) is a trivial shift in the frequency domain to align the filters' stop-bands to the sub-carriers. With this suppression of some tens of dB is achievable.

The equations of formula (3) can be rearranged to be as defined in the following formula (4):

$$ha_k(n) = h(n) \cdot \exp\left(2 \cdot j \cdot k \cdot n \frac{\pi}{M}\right) \cdot \exp\left(j \cdot \left(-k \cdot N \cdot \frac{\pi}{M} + (-1)^k \cdot \frac{\pi}{4}\right)\right)$$

$$hs_k(n) = h(n) \cdot \exp\left(2 \cdot j \cdot k \cdot n \frac{\pi}{M}\right) \cdot \exp\left(j \cdot \left(-k \cdot N \cdot \frac{\pi}{M} - (-1)^k \cdot \frac{\pi}{4}\right)\right)$$

(4)

wherein

$ha_k(n)$ is an impulse response request of a $k^{th}$ analysis sub-filter,

n is a time index,

h(n) is impulse response at time n,

j is the imaginary unit,

N is the order of the prototype filter,

M is the number of sub-signals,

$hs_k(n)$ is an impulse response request of a $k^{th}$ synthesis sub-filter.

As can be seen, formula 4 defines a uniform discrete Fourier transform (DFT) filter bank implementation shown in Figure 4. The second complex exponentials in the equations are the phase terms $HA_k$ and $HS_k$, correspondingly.

The filters defined by formula (3), or as rearranged by formula (4) achieve "nearly perfect" reconstruction when no frequency bands are suppressed. (Perfect reconstruction is a process by which a signal is completely recovered after being separated into its low frequencies and high frequencies.) Formulas 3 and 4 are computationally easier than formula 2, i.e. less computation capacity is needed when one of formulas 3 and 4 is used compared to a situation in which formula 2 is used.

Figure 5 illustrates an exemplary functionality of the adjusting unit in the filter unit or for the filter unit, the adjusting unit setting values for M and K.

First the spectrum analysis of a current location of the filter unit is performed by determining in step 501 non-free frequency bands, i.e. used radio bands, and by determining in step 502 whitespaces between and around the non-free frequency bands, i.e. by determining the whitespace spectrum that is usable as a single OFDM system. Then the number of sub-carriers to which the whitespace spectrum is to be divided is determined in step 503. Any way to determine the number may be used. With the information the factors M and K to be used in this location by the filtering unit are set. For example, M may be set to be equal to or smaller than the number of sub-carriers, and K may be set to be equal to or smaller than M. When the value of M is set, it is possible to find out the equalizers that receive sub-signals having a frequency band that at least partly overlap with one of the non-free frequency bands, and set in step 505 such equalizers to suppress the sub-signal to zero. In other words, the filter unit may be set to selectively suppress any number of frequency bands (ranges), each of any width, within the bandwidth of the whitespace (within the whitespace spectrum). As is evident from the above, an adaptive suppression is obtained, and the filter unit, and hence the output of the filter unit, and the transmitter is matched to the current frequency allocation.

Selecting the value for M to be the amount of sub-carriers results to narrowest possible guard bands but requires a little bit more computational resources. In other words, the use of the separate filter unit allows trade-offs between a filtering performance and an implementation complexity to be made.

The procedure of Figure 5 may be performed by another unit, remote to the apparatus comprising the filter unit (the transmitter), in which case the adapting unit in the apparatus may be configured to receive one or more of the values and then set it/them, and/or one or more of the values are preset to the filter unit (the transmitter) when it is fabricated. The remote unit may be part of a network management system of the operator, for example.

Figure 6 is a flow chart illustrating functionality of the ignoring unit in the receiver. When a signal, like y(n) from the filter unit, is received in the receiver, an OFDM demodulator demodulates the signal and outputs the demodulated signal to the ignoring unit connected to the output. When the ignoring unit receives in step 601 the demodulated signal, it checks in step 602, whether or not the signal has a frequency corresponding to a whitespace spectrum. If it has, the signal is forwarded in step 603 to further processing. Otherwise the signal is ignored (step 604). As can be seen, since non-free frequency bands (frequency ranges) are aligned, in the example, in the filter unit to the OFDM sub-carrier frequencies, the ignoring is a straightforward and easy process for the receiver.

The steps and related functions described above in Figures 3, 5 and 6 are in no absolute chronological order, and some of the steps may be performed simultaneously or in an order differing from the given one. Other functions can also be executed between the steps or within the steps. Some of the steps or part of the steps can also be left out or replaced by a corresponding step or part of the step.

The techniques described herein may be implemented by various means so that a transmitting and/or receiving apparatus implementing one or more functions described with an embodiment/example/implementation comprises not only prior art means, but also means for implementing the one or more functions/elements described with an embodiment and it may comprise separate means for each separate function/element, or means may be configured to perform two or more functions. For example, the filter unit, and/or the adapting unit, and/or the ignoring unit may be software and/or software-hardware and/or hardware and/or firmware component(s) (recorded indelibly on a medium such as read-only-memory or embodied in hard-wired computer circuitry) or combinations thereof. Software codes may be stored in any suitable, processor/computer/apparatus-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein. Software codes may be stored in any suitable, processor/computer-readable data storage medium(s) or memory unit(s) or article(s) of manufacture and executed by one or more processors/computers.

Figure 7 is a simplified block diagram illustrating some units for an apparatus 700 comprising at least one of the transmitter or receiver described above. In the illustrated example the apparatus comprises one or more interfaces (IF) 701 for receiving and/or transmitting information over air, one or more user interfaces (IF') 701' for interaction with a user, a processor 702 configured to implement at least the filter unit, and/or the adapting unit, and/or the ignoring unit functionality described herein with a corresponding algorithm/algorithms 703 and a memory 704 usable for storing a program code required at least for the context engine comprising the filter unit, and/or the adapting unit, and/or the ignoring unit.

In other words, an apparatus comprising a transmitter and/or a receiver described above is a computing device that may be any apparatus or device or equipment configured to perform one or more of corresponding apparatus functionalities described with an embodiment/example/implementation. The units described with an apparatus may be separate units, or a unit may be integrated to another unit in the same apparatus. For example, the adapting unit may be integrated with the filter unit.

More precisely, an apparatus comprising a transmitter and/or a receiver described above, may generally include a processor, controller, control unit, micro-controller, or the like connected to a memory and to various interfaces of the apparatus. Generally the processor is a central processing unit, but the processor may be an additional operation processor. Each or some or one of the filter unit, and/or the adapting unit, and/or the ignoring unit and/or algorithms described herein may be configured as a computer or a processor, or a microprocessor, such as a single-chip computer element, or as a chipset or circuitry, including at least a memory for providing storage area used for arithmetic operation and an operation processor for executing the arithmetic operation. Each or some or one of the filter unit, and/or the adapting unit, and/or the ignoring unit and/or algorithms described above may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions or calculations of one or more examples and/or elements. In other words, each or some or one of the filter unit, and/or the adapting unit, and/or the ignoring unit described above may be an element that comprises one or more arithmetic logic units, a number of special registers and control circuits.

Further, an apparatus comprising a transmitter and/or a receiver described above, may generally include volatile and/or non-volatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database/memory management system. The memory may also store computer program code such as software applications (for example, for one or more of the units/algorithms) or operating systems, information, data, content, or the like for the processor to perform steps associated with operation of the filter unit, and/or the adapting unit, and/or the ignoring unit in accordance with examples/embodiments. The memory, or part of it, may be, for example, random access memory, a hard drive, or other fixed data memory or storage device implemented within the processor/apparatus or external to the processor/apparatus in which case it can be communicatively coupled to the processor/apparatus via various means as is known in the art. An example of an external memory includes a removable memory detachably connected to the apparatus.

In addition, an apparatus implementing functionality or some functionality according to an embodiment/example/implementation of an apparatus comprising a transmitter and/or a receiver described above, may generally comprise a set of antennas, the number of which is not limited to any particular number. The output of the filter unit may be connected to one or more of the antennas.

Further, an apparatus implementing functionality or some functionality according to an embodiment/example/implementation of an apparatus comprising a transmitter and/or a receiver described above, may comprise other units, like different user interfaces for outputting information to a user.

It will be obvious to a person skilled in the art that, as technology advances, the inventive concept can be implemented in various ways. The invention and its embodiments are not limited to the examples described above but may vary within the scope of the claims.

**Claims**

1. A method comprising:

   receiving an OFDM modulated signal;
   splitting the signal to adjacent sub-signals across a whitespace spectrum by applying a bank of analysis filters to the signal;
forcing one or more sub-signals to zero; and
reconstructing the sub-signals to a signal by applying a bank of synthesis filters to the sub-signals.

2. A method as claimed in claim 1, further comprising:

using a prototype filter of order N with M sub-signals, wherein
an impulse response request $ha_k(n)$ of a $k^{th}$ analysis filter in the bank of analysis filter is defined as:

$$ha_k(n) = h(n) \cdot \exp\left(2 \cdot j \cdot k \cdot n\frac{\pi}{M}\right) \cdot \exp\left(j \cdot \left(-k \cdot N \cdot \frac{\pi}{M} + (-1)^k \cdot \frac{\pi}{4}\right)\right) \; ;$$

and
an impulse response request $hs_k(n)$ of a $k^{th}$ synthesis filter in the bank of synthesis filters is defined as:

$$hs_k(n) = h(n) \cdot \exp\left(2 \cdot j \cdot k \cdot n\frac{\pi}{M}\right) \cdot \exp\left(j \cdot \left(-k \cdot N \cdot \frac{\pi}{M} - (-1)^k \cdot \frac{\pi}{4}\right)\right)$$

wherein n is a time index, h(n) is an impulse response, and j is an imaginary unit.

3. A method as claimed in claim 2, wherein M is equal to or smaller than the number of sub-carriers.

4. A method as claimed in claim 1, 2 or 3, further comprising:

determining non-free frequency bands within the whitespace spectrum; and
forcing a sub-signal having a frequency band that at least partly overlap with one of the non-free frequency
bands within the whitespace spectrum to zero.

5. A method comprising:

receiving an OFDM demodulated signal,
checking whether or not the signal is on a band allocated to a whitespace frequency band;
if yes, forwarding the signal for further processing;
otherwise ignoring the signal.

6. A filter unit configured to be connectable to an OFDM modulator and comprising:

a bank of analysis filters configured to receive as an input signal an output of the OFDM modulator, and to split
the input signal to two or more subsignals;
a bank of equalizers, each equalizer configured to receive as an input an output from an analysis filter in the
bank of analysis filters, at least one of the equalizers being configured to force a sub-signal received as the
input to zero and to output the zero, and at least one of the equalizers being configured to forward the sub-
signal as an output; and
a bank of synthesis filters, each synthesis filter configured to receive as an input an output from an equalizer
in the bank of equalizers, the bank of synthesis filters being configured to reconstruct from the inputs a signal
and output the signal.

7. A filter unit as claimed in claim 6, wherein
the bank of analysis filters comprises a gain, M-1 delays, M down-samplers, M analysis sub-filters, a multipoint
transformer, and M multipliers, wherein the gain is configured to receive the input signal and amplify the input signal
with M, the output of the gain is connected to one of the delays and to one down-sampler, each of the other delays
of the M-1 delays being connected to another delay and to one down-sampler to provide corresponding inputs; each down-sampler is connected to an analysis sub-filter and configured to down-sample its input with a factor K that is smaller than or equal to M and output the result to the analysis sub-filter, the analysis sub-filter being connected to a multiplier via the multipoint transformer that is configured to apply one of a discrete fast fourier transform and an inverse discrete fast fourier transform to the filtered input received from an analysis sub-filter before outputting it to the multiplier that is configured to phase shift the sub-signal received as input and output the phase shifted sub-signal to an equalizator;

the bank of equalizators comprises M equalizators and is configured to force to zero each sub-signal that has a frequency band that at least partly overlaps with one of non-free frequency bands within the whitespace spectrum;

the bank of synthesis filters comprises M multipliers, a multipoint transformer, M+1 gains, M synthesis sub-filters, M up-samplers, M-1 delays, and M-1 adders, wherein a multiplier is connected to an equalizator to receive input from the equalizator, the multiplier being configured to phase shift the input and connected to a gain via the multipoint transformer so that M gains are connected to the multipoint transformer that is configured to apply one of a discrete fast fourier transform and an inverse discrete fast fourier transform to the input received from the multiplier, the gain connected to the multipoint transformer being configured to amplify the input with M, the gain being connected to a synthesis sub-filter to provide amplified input to the synthesis sub-filter, the synthesis sub-filter being connected to an up-sampler to provide filtered input to the up-sampler that is configured to up-sample the received input by the factor K, one of the M up-samplers being connected to one of the M-1 delays to provide the delay an input, each of the other up-samplers being connected to an adder to provide an input to the adder, and each of the other M-1 delays being connected to an adder to provide another input to the adder, one of the adders being connected to a gain to provide an input to the gain, each of the other adders being further connected to a delay to provide input to the delay, so that the gain connected to the one of the adders will receive a reconstructed signal as an input and is configured to amplify the signal received as an input with K, and to output the amplified signal.

8.   A filter unit as claimed in claim 7, wherein M is equal to or smaller than the number of sub-carriers and K is a positive integer that is equal to or smaller than M.

9.   A filter unit as claimed in claim 6, 7 or 8, wherein
the filter unit is a prototype filter of order N with M sub-signals;
an impulse response request $ha_k(n)$ of a $k^{th}$ analysis filter in the bank of analysis filter is defined as:

$$ha_k(n) = h(n) \cdot \exp\left(2 \cdot j \cdot k \cdot n \frac{\pi}{M}\right) \cdot \exp\left(j \cdot \left(-k \cdot N \cdot \frac{\pi}{M} + (-1)^k \cdot \frac{\pi}{4}\right)\right) \;\; ;$$

and
an impulse response request $hs_k(n)$ of a $k^{th}$ synthesis filter in the bank of synthesis filters is defined as:

$$hs_k(n) = h(n) \cdot \exp\left(2 \cdot j \cdot k \cdot n \frac{\pi}{M}\right) \cdot \exp\left(j \cdot \left(-k \cdot N \cdot \frac{\pi}{M} - (-1)^k \cdot \frac{\pi}{4}\right)\right)$$

wherein n is a time index, h(n) is an impulse response and j is an imaginary unit.

10.  A filter unit as claimed in any of claims 6 to 9, wherein the bank of analysis filters and the bank of synthesis filters comprises finite impulse response high-pass filters.

11.  A filter unit as claimed in claim 10, wherein the finite impulse response high-pass filters have a bandwidth that is equal to the intended sub-signal bandwidth.

12.  A transmitter comprising an OFDM modulator and a filter unit as claimed in any of claims 6 to 11, wherein the input of the filter unit is connected to the output of the OFDM modulator.

13.  An apparatus comprising a transmitter as claimed in claim 12 and a receiver.

**14.** An apparatus as claimed in claim 13, wherein the receiver comprises means for implementing the method of claim 5.

**15.** A computer program product comprising computer program code configured to perform a method as claimed in any of claims 1 to 5 when executed on a processor.

*FIG.1*

*FIG.2*

receiving modulated input signal 301

splitting the input signal into sub-signals 302

forcing some sub-signals to zero 303

reconstructing sub-signals into one signal 304

outputting reconstructed signal 305

*FIG.3*

*FIG.4*

determine non-free frequency bands — 501

determine whitespaces — 502

determine number of sub-carriers — 503

set M and K — 504

set equalizators that force to zero — 505

*FIG.5*

receive demodulated signal — 601

whitespace? — 602

no → ignore — 604

yes ↓

forward to further processing — 603

*FIG.6*

700

IF — 701

PROC. — 702

ALG. — 703

MEM — 704

IF' — 701'

*FIG.7*

Europäisches
Patentamt

European
Patent Office

Office européen
des brevets

## EUROPEAN SEARCH REPORT

Application Number

EP 14 17 7769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUICHI KIDA ET AL: "A theory of the optimum approximation of multiple-input multiple-output filter banks and trans-multiplexers", COMMUNICATIONS, SIGNAL PROCESSING, AND THEIR APPLICATIONS (ICCSPA), 2013 1ST INTERNATIONAL CONFERENCE ON, IEEE, 12 February 2013 (2013-02-12), pages 1-6, XP032350342, DOI: 10.1109/ICCSPA.2013.6487237 ISBN: 978-1-4673-2820-3 * page 1, right-hand column, line 1 - line 19 * * figure 2 * | 1,4-6, 10-15 | INV. H04L27/00 H04L5/00 |
| X | US 2013/121257 A1 (HE YONG [CN] ET AL) 16 May 2013 (2013-05-16) * abstract * * paragraphs [0016], [0017], [0047] - [0050], [0056]; figures 3A, 3B, 4 * | 5,15 | |
| A | EP 2 200 244 A1 (VODAFONE HOLDING GMBH [DE]) 23 June 2010 (2010-06-23) * abstract * * paragraphs [0016] - [0021], [0034]; figures 2, 4 * | 1,5, 12-15 | TECHNICAL FIELDS SEARCHED (IPC) H04L |

The present search report has been drawn up for all claims

| Place of search | Date of completion of the search | Examiner |
|---|---|---|
| Berlin | 23 January 2015 | Masche, Christian |

EPO FORM 1503 03.82 (P04C01)

## ANNEX TO THE EUROPEAN SEARCH REPORT
## ON EUROPEAN PATENT APPLICATION NO.

EP 14 17 7769

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2015

| Patent document cited in search report | | Publication date | Patent family member(s) | | Publication date |
|---|---|---|---|---|---|
| US 2013121257 | A1 | 16-05-2013 | CN | 103001754 A | 27-03-2013 |
| | | | EP | 2777235 A1 | 17-09-2014 |
| | | | JP | 2015502082 A | 19-01-2015 |
| | | | KR | 20140101729 A | 20-08-2014 |
| | | | US | 2013121257 A1 | 16-05-2013 |
| | | | WO | 2013070985 A1 | 16-05-2013 |
| EP 2200244 | A1 | 23-06-2010 | EP | 2200244 A1 | 23-06-2010 |
| | | | US | 2010189132 A1 | 29-07-2010 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SANJIT K. MITRA.** Digital Signal Processing, A Computer Based Approach. 731